# EUROPEAN PATENT APPLICATION

(11) **EP 2 805 922 A1**
(43) Date of publication of application: **26.11.2014**
(21) Application number: 13168853.3
(22) Date of filing: 23.05.2013
(51) Int. Cl.: C02F 1/52, C05F 7/00, C05F 3/00, C02F 11/14, C02F 11/00

(54) **A process for treatment of an aqueous slurry of organic origin**

(71) Applicant: IM-aces BV, 5803 LE Venray (NL)
(72) Inventor: Weterings, Cornelius Antonius Maria, 6171 AP Stein (NL)
(74) Representative: Janssen, Paulus J. P.

(57) **Abstract**

A process for treatment of an aqueous slurry of organic origin, containing water and inorganic components as well as organic matter, comprising in mineral salts potassium (K), phosphorus (P), nitrogen (N) and organically bound nitrogen (ammonia), and dry and/or dissolved organic and inorganic matter, such as pig manure. The slurry is mixed with 25 to 250 % (in volume) of an additive selected from the group of water-miscible solvents consisting of methanol, ethanol, 1-propanol, 2-propanol and acetone, or mixtures thereof. In particular, acetone is proposed. This induces a precipitation of minerals and dry matter, whereupon the slurry can easily be separated into liquid and semi-solid fractions. After separation, the additive and ammonia is removed from the liquid fraction, and preferably also from the semi-solid fraction.

## Description

### BACKGROUND OF THE INVENTION

The present invention is related to a process for treatment of an aqueous slurry of organic origin.

More in particular, the invention is related to a process for separating an aqueous slurry of organic origin containing water, and inorganic components as well as organic matter, comprising in mineral salts potassium (K), phosphorus (P) and nitrogen (N), and dry and/or dissolved organic and inorganic matter including ammonia, so as to obtain (i) a liquid fraction containing some of the K, P, and N, and little or no dry organic matter, which liquid fraction (possibly after a further treatment) is suitable for disposal into the environment and (ii) a semi-solid fraction having a lowered content of water, and containing most of the mineral K, P, and N, and dry organic matter, which semi-solid fraction (possibly after a further treatment) is suitable for use as a crop fertilizer.

In general, the aqueous slurries contemplated herein have in common that they are of organic origin, and that they at least comprise water and dry organic matter.

Contemplated herein are various types of aqueous slurries such as, for instance, animal manure, sludge from sewage treatment installations, or sludge from biogas production. Biogas production may, for instance, comprise fermentation of biomaterials and compositions thereof, such as, for instance, organic garbage from households or other sources, straw, corn, etc.

The term slurry, as used herein, also may be read as sludge, and *vice versa.*

As used herein any reference to potassium (K), phosphorus (P) and nitrogen (N) - or to "K, P, and N" or to "K, P, N", as the case may be - means that these elements (K, P and N) are present in the form of their mineral salts, and/or - in so far as N is concerned - also in the form of ammonia (which either may be gaseous NH₃ or NH₃ dissolved in water as ammonium hydroxide, NH₄OH, or as ammonium (NH₄⁺) salts). It is noted, however, that P, K and in particular N also may be part of the organic matter in the aqueous slurry. Obviously, also other elements and mineral salts (cations and anions) will be present in the aqueous slurry of organic origin.

As said, an important example of aqueous slurry of organic origin is animal manure. When farms raise both crops and livestock, the manure of the animals is usually brought onto the land as fertilizer. However, the creation of large farms dedicated to raising domestic animals at a commercial level in large numbers, such as, for instance, cows, horses, chickens, pigs, swine and sows (adult female swine), has created an increased environmental concern regarding animal manure, typically consisting of liquids and solids, created by such large domestic production of animals. Generally, such farms do not have enough land to dispose of the manure themselves. Moreover, there is a general tendency in national environmental legislation that maximum levels are being set for disposal of specific components, for instance of P and N, onto soil or into open water.

Typical environmental concerns - which although being related are different in results and effects - include contamination of air caused by the (mal)odors produced from the waste, groundwater and stream contamination from runoffs at the waste site, and contamination of soil, particularly for agricultural purposes, resulting from the large amounts of waste. Therefore, organic animal waste sludge has become a tremendous environmental problem throughout the world.

Further, transport of manure to neighboring crop farms for being put to good use is often hindered by the high water content of the manure. This content also makes the transport relatively expensive.

Therefore, it would be advantageous to first remove much of the water before the resulting dry or semi-dry manure is transported to other sites. There are several well-known techniques for separating manure or other slurries into a liquid and a (semi-)solid fraction. For instance, centrifuges may be used, or filters. Also, sedimentation is generally used.

A thorough treatise on techniques for separating aqueous slurries into liquid and semi-solid fractions, as known from the prior art, is given in "Solid-liquid separation of animal slurry in theory and practice. A review", by M. Hjorth et al., Agron. Sustain. Dev. 30 (2010), p. 153-180.

It is noted that water removed according to the disclosed techniques still contains a lot of the minerals. Many countries have or are developing regulations restricting the mineral content of wastewater that may be disposed of into the environment. Accordingly, in many cases the liquid fraction cannot immediately be disposed of without further treatment.

Another method of treatment of aqueous slurry of organic origin is by evaporation of the water. This method delivers pure water streams, but the large amount of energy needed for evaporating the water makes the method impractical.

Yet another method of treatment of aqueous slurry of organic origin is fermentation. This method delivers methane gas that may then be used as biogas or for combustion purposes. A disadvantage of fermentation is that part of the fibre in the slurry is consumed and is no longer available for use as fertilizer or soil improver.

The problem of contamination of the environment as described above is disclosed in US 5 885 461. In this patent, a solution is proposed wherein polymers are added to the slurry. The polymers provoke coagulation and precipitation of the dry matter in the slurry. However, the resulting dry matter still contains those polymers, so that they are lost. Moreover, such polymers often are not environmentally friendly or even toxic. Accordingly, they have to be removed from the dry matter obtained.

It is further to be noted that Hjorth et al., cited hereinabove, (in chapter 6.1.3, at pages 167-171) also propose a solution to improve the mechanical solid-liquid separation of suspensions by adding multivalent cations that cause coagulation and/or formation of polymers, with simultaneous flocculation. Also here, the environmental consequences of the method may limit its applicability.

Further general information on the problems relating to the production of animal waste products, and especially the disposal of such minerals-containing waste products, is given in "Afzetmogelijkheden van de dunne fractie van varkens-drijfmest na mestscheiding", (in translation: "Possible outlets for the thin fraction of pig slurry manure after an initial separation"), by O.F. Schoumans et al., Alterra-report No. 2331, ISSN 1566-7197 (2012). This recent publication gives an extensive survey of options in the Netherlands to deal with expected future problems due to excessive presence of minerals in the liquid fraction of pig slurry manure, even after some initial separation.

Regulations are being developed by the authorities of various countries to minimize effects of such problems as mentioned above, thereby requiring effective new methods to solve these problems. It is believed that the options shown in the above report are quite expensive, and that they do not provide adequate solutions to the problems to be solved by the present invention.

It is therefore an object of the present invention to provide a method of separating an aqueous slurry of organic origin as defined hereinabove, such as for instance animal manure, into (i) a liquid fraction wherein the K, P, N content of the liquid fraction is drastically lowered as compared with the same in the slurry, which liquid fraction is suitable for disposal into the environment, and (ii) a semi-solid fraction having substantially lowered water content and being suitable as a crop fertilizer. Even if it is not possible to bring the K, P, N content to zero in the liquid fraction, it should at least be lowered to a value that is acceptable for disposal into the environment.

Another, related, object of the invention is to provide a method of such separating treatment that allows to recover minerals present in the liquid fraction for further use.

### SUMMARY OF THE INVENTION

According to the invention, the object is reached in a process for separating an aqueous slurry of organic origin, containing water, and inorganic components as well as organic matter, comprising in mineral salts potassium (K), phosphorus (P), and nitrogen (N) and organically bound nitrogen (ammonia), and dry and/or dissolved organic and inorganic matter including ammonia, wherein the slurry is separated into a liquid fraction including little or no dry organic matter and a semi-solid fraction, wherein that process comprises the following steps:
a) adding to the slurry an additive selected from the group of water-miscible solvents consisting of methanol, ethanol, 1-propanol, 2-propanol, and acetone, including any mixtures of these, with the amount of additive added to the slurry being between 25 and 250 % (in volume) of the slurry, and preferably between 50 and 200 %, most preferably between 70 and 150 %;
b) separating the obtained mixture into (i) a liquid fraction containing most of the additive added, and (ii) a semi-solid fraction;
c) subjecting the liquid fraction obtained in b) to a process for removal of both the additive and the ammonia contained therein, thereby obtaining a liquid product suitable for disposal into the environment, optionally after further treatment.

The additive used according to the present invention is selected from the group of water-miscible solvents consisting of methanol, ethanol, n-propanol, i-propanol, and acetone. Also any mixtures of these water-miscible solvents may be used. The members of this group of water-miscible solvents are non-toxic, and each have a boiling point well below that of water, without forming an azeotrope therewith. The boiling points of the individual water-miscible solvents are, respectively, 64.6 °C (methanol), 78.5 °C (ethanol), 97 °C (1-propanol), 82.4 °C (2-propanol), and 56.2 °C (acetone). Moreover, these solvents are inexpensive and can be removed easily from the fractions obtained in the process according to the invention.

According to the invention, the amount of additive added to the slurry will generally be between 25 and 250 % (in volume) of the slurry, and preferably between 50 and 200 %, most preferably between 70 and 150 %. If the amount of additive is chosen higher than 250 %, no further advantages can be expected and the process will become unnecessarily expensive. If the amount of additive is chosen lower than 25 % the process will become too inefficient, mainly because separation into liquid and semi-solid fractions becomes difficult.

The liquid fraction obtained in step b) comprises water and most of the additive, and contains some of the mineral K, P, and N originating from the aqueous slurry, as well as ammonia. The semi-solid fraction obtained in step b) has a substantially lowered content of water as compared with the original slurry and contains large amounts of the mineral K, P, and N, as well as dry organic matter therefrom. The liquid content (water and additive together) of the semi-solid fraction is about the same as the water content of the semi-solid fraction would have been after solid/liquid separation of the original aqueous slurry if no additive would have been added. Accordingly, after the removal of additive and ammonia as specified in step c), the water content of the semi-solid fraction obtained is in fact substantially lowered, even to values which allow easily pelletizing the semi-solid fraction for use as fertilizer.

When a water-miscible solvent selected from the aforementioned group is added to the aqueous slurry of organic origin, it appears that most of the mineral salts present therein precipitate spontaneously in or onto the dry organic matter. Accordingly, it becomes easy to separate said mixture into a liquid fraction and a semi-solid fraction, for instance by centrifugation, filtration or sedimentation. The liquid fraction so obtained comprises water and most of the additive and contains some of the mineral K, P, and N originating from the aqueous slurry as well as ammonia.

In order to make the liquid fraction acceptable for disposal into the environment, the additive should of course be removed. Suitably this can be done, for instance, by heating to achieve distillation of the additive, optionally at reduced pressure. As the additives contemplated herein have boiling points below that of water, the amount of energy needed is rather limited.

It is further to be noted, that the remaining liquid fraction as obtained in step b) will be suitable for disposal into the environment after removal of the additive, even though regulations forbid disposing water containing large amounts of ammonia.

The ammonia present in the liquid fraction will, namely, be removed during the heating step for removal of the additive. While the evaporated additive is easily condensed and re-used in the process of the invention, the gaseous ammonia produced in the heating step may be captured in the form of a salt, for instance as ammonium sulfate, (NH₄)₂SO₄, by passing the gaseous ammonia stream through a solution of an acid (*in casu* sulfuric acid).

In a further embodiment of the invention, the process further comprises the additional step of:
d) subjecting the semi-solid fraction obtained in step b) to a process for removal of both the additive and the ammonia contained therein, thereby obtaining a product suitable as fertilizer.

Also in this further embodiment, the additive and the ammonia may be removed in similar ways as is described above for removal of these from the liquid fraction obtained in step b). The resulting product has been found to have a suitably low water content (of about 30 to 40 percent) to be transported to other sites efficiently. These water content values of the product allow for using it (*i.e.* after removal of additive and ammonia) directly as fertilizer. Of course, also further drying of such product is possible if so desired. In general pelletizing of these products is easy if fertilizer pellets are desired.

According to a still further embodiment of the invention, the additive that is recovered from step c) and/or step d) out of any of the liquid and semi-solid fractions is re-used in the process according to the invention.

In another embodiment of the invention, the process further comprises a preliminary step, wherein an aqueous slurry of organic origin (the primary slurry) is first separated into a first dry-matter-rich fraction and a secondary slurry, said preliminary step being followed by treating the secondary slurry according to the process of the said steps a) with the percentage of additive being taken as volume percentage towards the secondary slurry, b) and c), and optionally d).

In this other embodiment of the invention almost all of the dry organic matter present in the primary aqueous slurry will already be separated in this preliminary step, thereby yielding a first dry-matter-rich fraction and a secondary slurry. The said preliminary step may comprise any conventional separation technique, such as sedimentation, filtration or centrifugation. Now, according to this embodiment of the invention, adding an additive as mentioned in step a) and in an amount - which of course now is calculated as a percentage of the volume of the secondary slurry - results in precipitation of mineral salts, and thus in a mixture that can be separated into (i) a liquid fraction containing most of the additive added, and (ii) a second semi-solid fraction of precipitated mineral salts and any dry organic matter remaining after the first separation.

Thus, according to this embodiment of the invention, the primary organic slurry, that is, e.g., a slurry that has been delivered from a source, such as the manure tank of a farm, is first pre-treated to separate a first almost solid fraction rich in dry matter of organic origin, that may directly, or after some further drying step, be used as a crop fertilizer. The remaining aqueous slurry, which in this embodiment of the invention can also be referred to as the pre-treated aqueous slurry, is then treated according to the method of claim 1. This has the advantage that the obtained first solid fraction of dry organic matter does not have to be mixed with the additive. In this way lower amounts of additive may be used, since its percentage is taken towards the volume of the secondary slurry. It has been found, moreover, that it is less easy to remove the additive from a solid fraction than from a liquid fraction.

An important application of the process according to the invention is treatment of animal manure, especially manure from pigs or sows. Depending on the type of animal houses, manure includes feces and straw and may or may not include urine. Manure from sows normally includes feces and urine of their piglets. The composition is also dependent on the food of the animals, which is generally stable over the year.

Pig manure generally consists of water (about 90%); dry matter, mostly organic fibre (about 8%); and K, P, N and ammonia (together about 2%). Accordingly, the process of the present invention may be advantageously applied to animal manure as the aqueous slurry of organic origin, even more advantageously to manure from pigs or sows. Likewise, the process of the present invention may be advantageously applied to
The process according to the present invention is, however, not limited to the applications mentioned above. Other applications are contemplated by the inventor. Such applications are, e.g., treatment of aqueous slurries formed as a product remaining after fermentation of organic sewage waste, organic household garbage or agricultural waste.

Further, the process may well be applied to treating the substances remaining from production of bio-ethanol from organic material, such as, e.g., straw, corn, or other agricultural waste. It may also be applied to treating wet manure from cows or other livestock animals.

The additive selected from the group of water-miscible solvents consisting of methanol, ethanol, 1-propanol, 2-propanol, and acetone, including any mixtures of these, preferably is acetone. Acetone has the advantage that it is cheap and amply available. Moreover, acetone has a boiling point of 56.2°C, so that energy use for distillation is relatively low.

Now, it may be so that the liquid fraction obtained in step b) and subjected to step c) still contains more potassium (K) than is acceptable for disposal in the environment in accordance with local regulations. Therefore, in a further modified embodiment of the invention, a small amount of gypsum is added to the aqueous slurry of organic origin (primary slurry) or to the secondary slurry of the aforementioned other embodiment of the process of the invention, in step a) or before the separation process of step b). The gypsum should have sufficient time to react before entering into step b). Generally, already a few minutes of contacting time will suffice, preferably at least 5 minutes, and more preferably at least 10 minutes.

The gypsum may be added in solid form, or as a concentrated aqueous slurry, or even as a slurry in a solvent used as additive in the present invention. Generally, very low concentrations of gypsum in respect of the amount of dry matter, for instance of from 0.1 to 10 percent by weight as compared with the weight of the dry matter in the slurry to be treated (*i.e*. respectively the aqueous slurry of organic origin, or the secondary slurry, as the case may be), will already be sufficient for drastically lowering the K content in the resulting liquid fraction of step b). The term "dry matter" is herein defined as the matter remaining after all liquids have been evaporated from the slurry (or liquid fraction, as the case may be).

In order to further decrease the content of K, additionally clay or active carbon may be added in small quantities, so as to promote coagulation of mineral salts.

It should be noted that EP 559 858 discloses the use of CO₂ and gypsum in treating animal manure for binding ammonia and other ingredients. However, this technique is merely used for removing NH₃ from manure and not for removing mineral P, K, and N. There is no teaching or suggestion at all with respect to the use of gypsum in accordance with the present invention.

In the process according to the present invention step a) is generally performed within a temperature range of between 2°C and 35°C, preferably from 5°C to 25°C and most preferably from 10°C to 20°C. Generally, the aqueous slurry of organic origin will be available at ambient temperature, or in a temperature range of from 5°C (*e.g.* in storage cellars for manure) to about 38°C (when freshly obtained manure is used). In order to perform the process of the invention in the most favorable way it therefore may be advisable to subject the original (primary) slurry (or secondary slurry) first to a step of changing the temperature to a preferred value by means of known techniques.

These and other objects of the invention will be evident from the following description, that is merely intended for explaining an embodiment of the invention, but may not be seen as a limitation of the scope of the invention. The scope of the invention is defined by the appended claims only.

### BRIEF DESCRIPTION OF THE DRAWINGS

Fig. 1 shows a schematic view of an exemplary process according to the present invention.
Fig. 2 shows schematic view of a modified form of the exemplary process, comprising a preliminary step of solid/liquid separation.

In these drawings, same numbers or references refer to same elements.

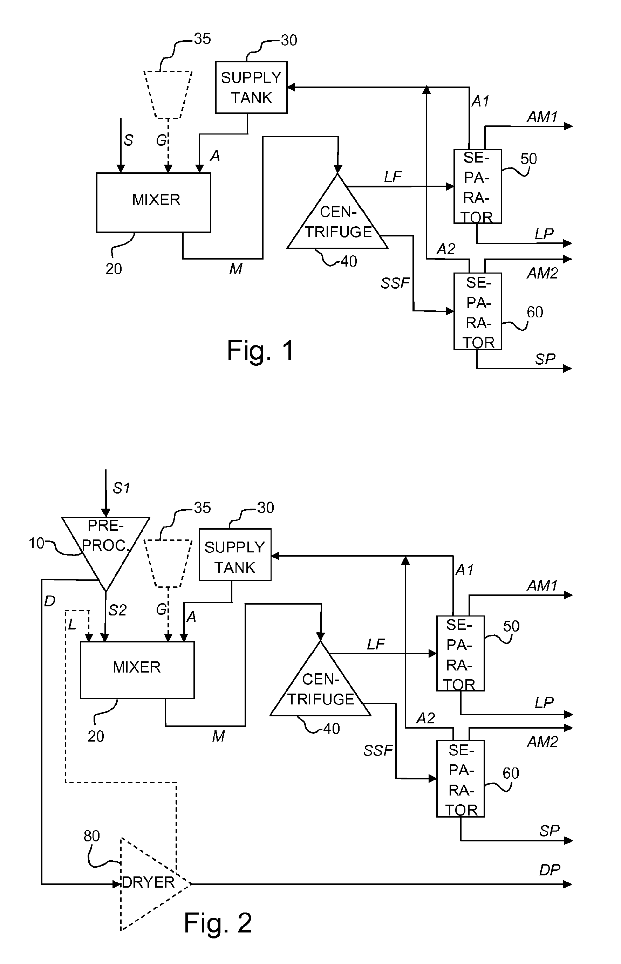

The following symbols are used in the figures:
- S =: Slurry (in particular: aqueous slurry of organic origin)
- S1 =: Primary slurry in the process of Fig. 2 (same as S in Fig. 1)
- S2 =: Secondary slurry in the process of Fig. 2
- A, A1, A2 =: additive (for instance acetone) streams
- AM1, AM2 =: ammonia streams
- D =: Dry-matter-rich fraction in the first stage of the process of Fig. 2
- DP =: Dry Product in the process of Fig. 2
- M =: Mix of slurry and additive (for instance acetone)
- L =: Liquid fraction in the first stage of the process of Fig. 2
- LF =: Liquid Fraction
- LP =: Liquid Product
- SSF =: Semi-Solid Fraction
- SP =: Solid Product
- G =: Gypsum
- 10 =: Solid/liquid separator in preliminary step of the process of Fig. 2
- 20 =: Mixer
- 30 =: Supply tank for the additive
- 35 =: (optional) Supply tank for gypsum
- 40 =: Solid/liquid separator, for instance centrifuge
- 50 =: Separator for removal of ammonia and additive from LF
- 60 =: Separator for removal of ammonia and additive from SSF
- 80 =: Optional dryer.

### DESCRIPTION OF PRACTICAL EMBODIMENTS OF THE INVENTION

A first and a second example of processes according to the present invention are illustrated schematically in the drawings. It should be kept in mind that each of these drawings is merely schematic and that only essential elements are depicted, while non-essential elements, such as buffer tanks, pumps, etc. have been omitted for simplicity. Such elements can without problem be filled-in by the skilled person.

Further, please note that the exemplary processes depicted in the drawings have been devised in particular for treating pig or sow manure. Other aqueous slurries of organic origin in water may, however, be treated according to the present invention in the same or at least a very similar way.

Fig. 1 schematically shows a first embodiment of the present invention.

An aqueous slurry S of organic origin is treated by mixing same with the additive A, for instance with acetone, with the result that most of the mineral salts precipitate onto or in the dry organic matter present in S. The obtained mixture is then separated into a semi-solid fraction SSF (having a lowered content of water, and containing most of the mineral K, P, and N, and dry organic matter), and a liquid fraction LF (containing some of the mineral K, P, and N, and most of the ammonia). SSF and LF each also contain water, additive and ammonia. In particular the additive and ammonia present in SSF and LF are then removed, for instance by evaporation, the removed additive then being returned to the additive supply tank.

More specifically, as illustrated in Fig. 1, the slurry S is fed to a mixer assembly 20, where it is mixed with the additive A, for instance acetone, which is kept in a supply tank 30.

The slurry S may, in a special embodiment as drawn in broken lines in Fig. 1, also be mixed with a small amount of gypsum G (CaSO₄.2H₂O) from a container 35, in which case the gypsum is preferably added before (e.g., 10 minutes before) the additive is added. However, the gypsum also may be added simultaneously with the additive, provided that sufficient residence time (of at least 5 minutes, but preferably at least 10 minutes) in the mixer is ensured before the mixture is fed to centrifuge 40. The gypsum is intended for converting K (potassium) into insoluble salts, thereby lowering its concentration in the liquid product. Optionally, also clay, for instance, bentonite or montmorillonite clay, and/or active carbon may be added together with the gypsum, for removing K. Of course, simultaneously with precipitation of potassium salts also other mineral salts will be precipitated. The present invention therefore not only lowers the K (i.e. K⁺) content in solution, but also the content of other cations (*e.g*. Na⁺, Mg²⁺, Ca²⁺, Fe²⁺, Fe³⁺, etc.) and of anions (*e.g*. Cl⁻, SO₄²⁻, PO₄³⁻ , NO₃⁻, etc.) present in solution in the original slurry S.

After mixing, the mixture M is transported to a separator device 40, such as a centrifuge. Other separator devices may be used as well, e.g. a filter assembly. A centrifuge has the advantage that the slurry mix may be treated in a continuous mode, but the process may also be operated in batch mode, in which case simple sedimentation in a tank is also a good, and inexpensive, solution.

The separation step in separator 40 produces a liquid fraction LF and a semi-solid fraction SSF.

The liquid fraction LF contains most of the additive A, for instance acetone, and most of the ammonia, and those are now separated from the liquid product LP in separator assembly 50. The additive, especially if this is acetone, may easily be removed by distillation. Acetone has a low boiling point (56.2 °C). The heat for the distillation may be generated by a parallel process (not shown), for instance in a process wherein part of the original slurry S is fermented under formation of biogas, or by another biogas process or heat-generating process. The removed additive, such as acetone, (stream A1) is recovered and returned to the supply tank 30 for re-use.

Ammonia is also removed from the liquid fraction LF, for instance by evaporation as gaseous NH₃, in particular by distillation, upon which it can easily be recovered by converting it into a salt, for instance into (NH₄)₂SO₄. The removed ammonia stream is delivered in stream AM1. The remaining liquid product, delivered in stream LP, can be disposed of into the environment, as it will fit all environmental regulations.

The semi-solid fraction SSF basically consists of the precipitation products from the centrifuge 40 and includes, depending on the process, dry matter (organic matter including fibrous materials such as straw) as well as some water. The water content achieved for this fraction is substantially lower than such content would have been without applying the additive according to the present invention, since the liquid part of this fraction now not only comprises water, but also additive. The ratio between water and additive depends (linearly) on the amount of additive added. Moreover, SSF also still contains some ammonia. The additive and ammonia are, similarly as is done for the liquid fraction LF, removed in separator assembly 60. This results in a solid product SP, which may immediately be used as soil fertilizer (or can be further dried and converted into, for instance, pelletized or granular forms of fertilizer), and a stream of the additive, for instance acetone, A2, as well as a gaseous ammonia stream AM2 are separately delivered. The additive stream A2 is again returned to supply tank 30 for re-use.

Fig. 2 schematically shows a second, modified, embodiment of the present invention.

This second, modified, embodiment differs from the first embodiment shown in Fig. 1, in that the (primary) organic slurry (S1), as it comes from the source, for instance the pig house of a farm, is first treated in a pre-processor 10 for first taking out much of the dry organic matter via stream D, leaving a thinner slurry S2 which may then be processed as explained in Fig. 1. Apart from the pre-processor 10, the process of Fig. 2 is the same as that of Fig. 1 and therefore a description of the identical elements is omitted here.

The slurry S2 may, in a special embodiment drawn in broken lines in Fig. 2, also be mixed with a small amount of gypsum G (CaSO₄.2H₂O) from a container 35, in the same way as is described above.

Accordingly, in Fig. 2, primary slurry S1 is fed into pre-processor 10, where it is separated into a stream of secondary, thinner slurry S2 and a dry-matter-rich fraction D that is - optionally upon further drying in a dryer 80 - delivered as a dry product DP, ready for immediate use as fertilizer and soil improver. The dryer 80 may comprise a centrifuge, a filter assembly or any other device suitable for the purpose.

Secondary slurry S2 is fed into mixer 20, whereupon the process of the invention takes over, as described in Fig. 1.

The pre-processor may be a filter assembly, a precipitation tank, a centrifuge or any other device suitable for the purpose. Also, pre-processor 10 may include a fermentation assembly where part or all of the primary slurry is fermented in order to generate heat energy.

The energy generated during the fermentation, or available via the biogas produced, may later be used in the separators 50 and 60.

The invention will now be illustrated by means of the following examples, that are, however, not to be considered as limiting the scope of the invention.

The experimental data below may be considered in comparison with the data given in the prior art document of Hjorth et al., mentioned the introduction of this application.

General part of the experimental examples described below.

All experiments described below were performed at laboratory scale by a commercially operating research laboratory in the Netherlands.

The experiments were carried out batch-wise, starting from 500 ml (approximately 500 g) of pig manure, which was obtained from a model livestock farm.

The following analyses have been carried out on the starting material (pig manure slurry) and the samples of fractions obtained during the experiments:
* pH
* dry matter (not determined for liquid fraction)
* ash (not determined for liquid fraction)
* total N, NH₄-N (ammoniacal form), NO₃-N (nitrate)
* total P, PO₄-P (phosphate)
* K

Table 1 shows the results of the analysis

**Table 1**

| | | | DM | ash | Nt | NH4-N | NO3-N | Pt | PO4-P | K | pH |
|---|---|---|---|---|---|---|---|---|---|---|---|
| | ml | g | g/kg | g/kg | g/kg | g/kg | g/kg | g/kg | g/kg | g/kg | |
| Manure | 500 | 499 | 96.6 | 20.5 | 7.07 | 3.82 | <0.010 | 1.41 | 0.316 | 4.65 | 7.16 |

Details of analyses:
- pH was determined using a daily-calibrated pH electrode
- Dry Matter (DM) content was measured using a gravimetric method (WI 4.25-111)
- total N, NH₄-N and NO₃-N were determined by first destructing the manure using test WI 4.25-104, followed by:
-- for total N (Nₜ) content: according to Kjeldahl (WI 4.25-115)
-- for ammoniacal N: distillation (WI 4.25-103), and photometric method (WI 4.25-114) for ammoniacal N content in liquid
-- for NO₃-N content: ion chromatography.
- K content was determined by destruction (WI 4.25- 104) followed by flame photometric method (WI 4.25-128)
- total P (Pₜ) and PO₃-P were determined by first destructing the manure using test WI 4.25-104, followed by:
-- for PO₃-P: photometric method (WI 4.25-106)
-- for total P: in the supernatant after centrifugation at 4500 rpm.

All methods specified as WI 4.25-xxx are methods known from Wageningen University in The Netherlands.

### Example 1 - proof of effect

In a first example, intended for proving the effect of the invention, the starting product was mixed with a like amount of acetone and stirred for 10 minutes at 10°C. Then, the slurry was separated into a liquid fraction and a thick fraction by filtering over a paper filter.

The thick fraction was dried at 105°C overnight and analysed for total N, total P and K content.

The liquid fraction was heated to 56°C while feeding air therethrough in order to evaporate the acetone. This procedure necessarily provokes water and ammonia evaporation as well. The resulting factor of concentration due to water evaporation was measured. The end product was analysed for total N, NH₄-N, NO₃-N total P, PO₄-P and K.

Results are shown in Table 2. Concentration factor due to water evaporation was 1.48. Those values of mineral content that are specified in absolute value, were corrected by dividing the value by the concentration factor in order to make the results of all experiments comparable. The corrected values (of quantitative results only) appear in parentheses in Table 2. Of course, values of ammoniacal N (NH₄-N) and total N cannot be corrected in this way, because part of the evaporated liquid is ammonia.

**Table 2**

| | | | DS | ash | Nt | NH4-N | NO3-N | Pt | PO4-P | K |
|---|---|---|---|---|---|---|---|---|---|---|
| | ml | g | g/kg | g/kg | g/kg | g/kg | g/kg | g/kg | g/kg | g/kg |
| Acetone | 500 | 395 | | | | | | | | |
| Liquid fraction (after heating) Concentration factor 1.48 | | 305 | | | 3.49 | 3.08 | <0.005 | <0.005 | <0.005 | 4.14 (2.80) |
| Thick fraction (after drying) | | 39.6 | 1000 | 0.162 | 29.9 | | | 14.8 | | 15.2 |

It appears that (taking into account the concentration factor of 1.48) the liquid fraction contains most of the ammonia, but significantly less N and P in mineral form. K content is also substantially lowered, although less significantly. The thick fraction has retained most of the mineral salts.

### Example 2 - Ratio slurry/acetone

The starting product was mixed and stirred with acetone for 10 minutes in several different volume ratios of slurry:acetone, namely 1:1, 1:2 and 1:0.5 at a temperature of 10 °C. Then, the slurry was separated into a liquid fraction and a thick fraction by filtering over a paper filter or (ratio 1:0.5) by centrifugation at 4500 rpm for 10 minutes at 5°C.

The liquid fraction was handled and analysed in the same way as described above in relation to Example 1.

Table 3 gives the results, together with the analysis of the original slurry. The slurry:acetone ratio is given in volume. Using the densities of slurry (approx. 1 g/cm³) and acetone (0.79 g/cm³), weight ratios may easily be calculated instead.

**Table 3**

| | | | DS | ash | Nt | NH4-N | NO3-N | Pt | PO4-P | K |
|---|---|---|---|---|---|---|---|---|---|---|
| | ml | g | g/kg | g/kg | g/kg | g/kg | g/kg | g/kg | g/kg | g/kg |
| Manure | 500 | 499 | 96.6 | 20.5 | 7.07 | 3.82 | <0.010 | 1.41 | 0.316 | 4.65 |
| Acetone (1:1) | 500 | 395 | | | | | | | | |
| Liquid fraction, after heating Concentration factor 1.74 | | 259 | | | 2.77 | 2.14 | <0.010 | 0.011 (0.006) | 0.006 (0.003) | 5.19 (2.98) |
| Acetone (1:2) | 1000 | 782 | | | | | | | | |
| Liquid fraction, after heating Concentration factor 1.21 | | 395 | | | 2.91 | 2.95 | <0.010 | 0.010 (0.008) | 0.003 (0.002) | 3.90 (3.22) |
| Acetone (1:0.5) | 250 | 207 | | | | | | | | |
| Liquid fraction, after heating Concentration factor 1.80 | | 251 | | | 4.00 | 3.85 | <0.010 | 0.025 (0.014) | 0.023 (0.013) | 4.65 (2.58) |

As seen in Table 3, the mineral content left in the liquid fraction is approximately the same for slurry:acetone ratios of 1:1 and 1:2, and slightly higher for the ratio 1:0.5. The latter mixture also could not easily be separated into liquid and semi-solid fractions by filtering, such that it had to be centrifuged. Accordingly, the 1:0.5 ratio is less preferable, but still effective.

### Example 3 - Effect of temperature

The experiment of Example 2 for the slurry:acetone ratio 1:1 was repeated at 20°C. Table 4 reports the analysis results.

**Table 4**

| | | | DS | ash | Nt | NH4-N | NO3-N | Pt | PO4-P | k |
|---|---|---|---|---|---|---|---|---|---|---|
| | ml | g | g/kg | g/kg | g/kg | g/kg | g/kg | g/kg | g/kg | g/kg |
| Manure | 500 | 505 | 96.6 | 20.5 | 7.07 | 3.82 | <0.010 | 1.41 | 0.316 | 4.65 |
| Acetone | 510 | 421 | | | | | | | | |
| Liquid fraction, after heating Concentr. factor 1.54 | | | | | | | | | | |
| | | 296 | | | 3.19 | 2.83 | <0.005 | <0.005 | <0.005 | 4.31 (2.80) |

As can be seen from Table 4, the process is about equally effective at 20°C as it is at 10°C.

### Example 4 - use of alternative solvent (methanol).

An experiment was conducted in which manure was mixed with methanol (1:1 in volume) instead of acetone. The experiment was conducted in very much the same way as the one of example 1, but the liquid fraction was now heated to 62°C. It appeared that the mixture of manure and methanol could not easily be separated by filtering over paper, so that it was centrifuged at 4500 rpm for 10 minutes at 5°C. The results of analysis of the liquid fraction appear in Table 5.

**Table 5**

| | | | DS | ash | Nt | NH4-N | NO3-N | Pt | PO4-P | K |
|---|---|---|---|---|---|---|---|---|---|---|
| | ml | g | g/kg | g/kg | g/kg | g/kg | g/kg | g/kg | g/kg | g/kg |
| Manure | 500 | 504 | 96.6 | 20.5 | 7.07 | 3.82 | <0.010 | 1.41 | 0.316 | 4.65 |
| Methanol | 500 | 396 | | | | | | | | |
| Liquid fraction, after heating Concentration factor 1.54 | | 296 | | | 2.85 | 2.38 | <0.005 | <0.005 | 0.020 (0.013) | 3.62 (2.35) |

The effect of forcing minerals to precipitate onto the semi-solid fraction is apparent. The K content of the liquid fraction is even lower than that of the experiments with acetone. However, separation into liquid and semi-solid fractions was rather difficult, and therefore the skilled person may in some situations prefer acetone over methanol.

The practical embodiments of the present invention as shown and described hereinabove are given by means of example only. Other embodiments will be contemplated by the skilled person on the basis of the present description, but are considered within the scope of the invention, that is limited by the terms of the appended claims only.

## Claims

1. A process for separating an aqueous slurry of organic origin, containing water, and inorganic components as well as organic matter, comprising in mineral salts potassium (K), phosphorus (P), and nitrogen (N) and organically bound nitrogen (ammonia), and dry and/or dissolved organic and inorganic matter including ammonia ,wherein the slurry is separated into a liquid fraction including little or no dry organic matter and a semi-solid fraction,
**characterized in that** the process comprises the following steps:
a) adding to the slurry an additive selected from the group of water-miscible solvents consisting of methanol, ethanol, 1-propanol, 2-propanol, and acetone, including any mixtures of these, with the amount of additive added to the slurry being between 25 and 250 % (in volume) of the slurry, and preferably between 50 and 200 %, most preferably between 70 and 150 %;
b) separating the obtained mixture into a liquid fraction containing most of the additive added, and a semi-solid fraction;
c) subjecting the liquid fraction obtained in b) to a process for removal of both the additive and the ammonia contained therein, thereby obtaining a liquid product for disposal into the environment, optionally after further treatment.

2. The process according to claim 1, further comprising the additional step of:
d) subjecting the semi-solid fraction obtained in step b) to a process for removal of both the additive and the ammonia contained therein, thereby obtaining a product suitable as fertilizer.

3. The process according to claim 1, further comprising a preliminary step, wherein aqueous slurry of organic origin (the primary slurry) is first separated into a dry-matter-rich fraction and a secondary slurry, said preliminary step being followed by treating the secondary slurry according to the process of the said steps a) with the percentage of additive being taken as volume percentage towards the secondary slurry, b) and c), and optionally d).

4. The process according to any of claims 1, 2 or 3, wherein the aqueous slurry of organic origin is animal manure.

5. The process according to any of claims 1, 2 or 3, wherein the aqueous slurry is a product remaining after fermentation of organic sewage waste, organic household garbage or agricultural waste.

6. The process according to claim 4, wherein the animal manure is manure from pigs or sows.

7. The process according to any of the preceding claims, wherein the said process for removal in step c) and/or d) includes a distillation process of the additive.

8. The process according to claim 7, wherein the distillation process includes recovery of the additive.

9. The process according to any of the preceding claims, wherein the water-miscible solvent is acetone.

10. The process according to any of the preceding claims, wherein in step a) and/or in step c) also gypsum is added.

11. The process according to any of the preceding claims, wherein the process of step a) is performed within a temperature range between 2 °C and 35 °C, preferably from 5 °C to 25 °C and most preferably from 10 °C to 20 °C.
